Europäisches Patentamt

European Patent Office

Office européen des brevets

(11) Veröffentlichungsnummer : **0 160 858**
**B1**

(12) **EUROPÄISCHE PATENTSCHRIFT**

(45) Veröffentlichungstag der Patentschrift :
27.07.88

(51) Int. Cl.⁴ : **C 03 B 37/018**

(21) Anmeldenummer : 85104505.4

(22) Anmeldetag : 13.04.85

(54) Verfahren und Vorrichtung zur Herstellung eines Aerosolstromes.

(30) Priorität : 11.05.84 DE 3417438

(43) Veröffentlichungstag der Anmeldung :
13.11.85 Patentblatt 85/46

(45) Bekanntmachung des Hinweises auf die Patenterteilung : 27.07.88 Patentblatt 88/30

(84) Benannte Vertragsstaaten :
AT BE DE FR GB IT NL SE

(56) Entgegenhaltungen :
EP-A- 0 026 625
EP-A- 0 134 507
FR-A- 2 399 978
FR-A- 2 496 231

(73) Patentinhaber : Licentia Patent-Verwaltungs-GmbH
Theodor-Stern-Kai 1
D-6000 Frankfurt/Main 70 (DE)

(72) Erfinder : Geyer, Arthur, Dipl.-Ing. (FH)
Scheffelgasse 9
D-7900 Ulm (DE)
Erfinder : Kuisl, Max, Dr. rer. nat.
Binsenweiherweg 9
D-7900 Ulm (DE)
Erfinder : Pfeiffer, Eugen, Ing. grad.
Talstrasse 9
D-7901 Staig (DE)
Erfinder : Roese, Helmut
Burgunderweg 9/7
D-7900 Ulm (DE)
Erfinder : Klein, Werner, Dipl.-Ing. (FH)
Schillerstrasse 24
D-7910 Neu-Ulm (DE)

(74) Vertreter : Schulze, Harald Rudolf, Dipl.-Ing. et al
Licentia Patent-Verwaltungs-GmbH Theodor-Stern-
Kai 1
D-6000 Frankfurt/Main 70 (DE)

**Beschreibung**

Die Erfindung betrifft ein Verfahren und eine Vorrichtung zur Herstellung eines Aerosolstromes, insbesondere eines $SiO_2$-Partikel haltigen Aerosolstromes zur Herstellung einer Vorform für einen Lichtwellenleiter.

Ein derartiges Verfahren und eine derartige Vorrichtung sind bekannt aus der nichtvorveröffentlichten europäischen Patentanmeldung EP-A-0 134 507, die unter Artikel 54(3) EPÜ fällt.

In dieser Schrift werden ein Verfahren und eine Vorrichtung beschrieben, bei welchen gas- und-/oder dampfförmige Reaktanden, z. B. gasförmiges Siliziumtetrachlorid ($SiCl_4$) und Wasserdampf ($H_2O$), einem Aerosolgenerator zugeführt werden. Dieser besteht aus konzentrisch angeordneten Rohren, die unterschiedliche Durchmesser besitzen und in denen die Reaktanden einem heizbarem Reaktionsraum zugeleitet werden. In diesem Reaktionsraum entsteht durch eine flammenfreie chemische Reaktion gemäß der Formel $SiCl_4 + 2H_2O \rightarrow SiO_2 + 4HCL$ ein $SiO_2$-Partikel haltiger Aerosolstrom, der innerhalb eines aerosolfreien Gasund/oder Dampfstromes geführt wird. Letzterer wird dem Reaktionsraum zugeleitet durch das äußere der konzentrisch angeordneten Rohre. Der entstandene Aerosolstrom wird einem zu beschichtenden Trägerkörper zugeleitet, z. B. einem um seine Längsachse rotierenden Graphitrohr. Auf der Außenfläche des Trägerkörpers werden dann die in dem Aerosolstrom enthaltenden ($SiO_2$-)Partikel abgeschieden, z. B. entlang einer Mantellinie und in Form von sogenanntem Glasruß (« soot »). Dieser undotierte und/oder dotierte Glasruß wird anschließend gesintert und zu einer Vorform für einen Lichtwellenleiter weiterverarbeitet.

Der Erfindung liegt die Aufgabe zugrunde, eine weitere Ausbildung anzugeben, die eine verbesserte Beschichtung der Vorform erreicht.

Diese Aufgabe wird gelöst durch die in den Patentansprüchen 1 und 2 angegebenen Merkmale.

Vorteilhafte Ausgestaltungen und Weiterbildungen sind den Unteransprüchen entnehmbar.

Ein Vorteil der Erfindung besteht darin, daß es die im wesentlichen senkrechte Anordnung des Aerosolgenerators gestattet, als Füllstoff z. B. Quarzsand unterschiedlicher Körnungen zu verwenden. Dadurch ist es in kostengünstiger Weise möglich, den Strömungswiderstand der Austrittskörper auf verschiedene Betriebsparameter, z. B. die durchgesetzte Gas- und/oder Dampfmenge, anzupassen.

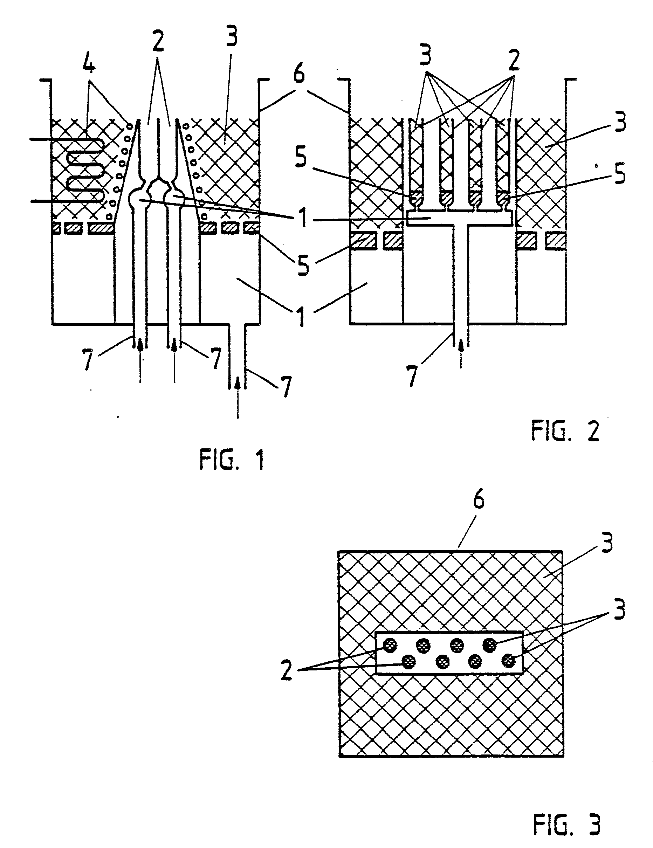

Die Erfindung wird im folgenden anhand eines Ausführungsbeispiels näher erläutert unter Bezugnahme auf eine schematische Zeichnung. Die Figuren 1, 2, 3 zeigen Querschnitt, Längsschnitt sowie Aufsicht des Ausführungsbeispiels.

Das Ausführungsbeispiel bezieht sich auf das in der eingangs erwähnten europäischen Patentanmeldung angegebene Ausführungsbeispiel, bei dem aus den gas- und/oder dampfförmigen Reaktanden Siliziumtetrachlorid ($SiCl_4$) und Wasser ($H_2O$) ein Siliziumdioxid ($SiO_2$)-Partikel enthaltender laminarer Aerosolstrom erzeugt wird. Dieser Aerosolstrom wird laminar geführt innerhalb eines partikelfreien Gas- und/oder Dampfstromes.

Gemäß den Fig. 1 bis 3 gelangen die beispielhaft gewählten Reaktanden durch getrennte Zuführungsleitungen 7 in Verteiler 1, z. B. Rohre mit einem großen Querschnitt und daher niedrigem Strömungswiderstand. Auf dem Verteiler 1 sind im wesentlichen senkrecht stehende Austrittskörper 2 angebracht, z. B. Rohre mit einer Länge von ungefähr 5 cm und einem Innendurchmesser von ungefähr 1 cm. Zur Erhöhung des Strömungswiderstandes sind die Austrittskörper 2 mit einem Füllstoff 3 gefüllt, z. B. Quarzwolle und/oder Quarzsand, der durch einen gasdurchlässigen Trennkörper 5, z. B. Quarzwolle, Glasvlies und-/oder eine durchlöcherte Quarzoder Keramikplatte, gehindert wird, in den Verteiler 1 zu fallen. Bei der beschriebenen Anordnung ist der Strömungswiderstand der Austrittskörper 2 wesentlich größer, z. B. zehnmal größer, als derjenige der Verteiler 1. Dadurch wird vorteilhafterweise erreicht, daß die aus den Austrittskörpern 2 austretenden Gas- und/oder Dampfmengen nahezu unabhängig sind, insbesondere vom Ort des Austrittskörpers auf dem Verteiler und/oder von zeitlichen sowie örtlichen Druckschwankungen innerhalb des Verteilers.

Durch Wahl der Korngröße und/oder der Füllhöhe des Füllstoffs 3 ist der Aerosolgenerator in kostengünstiger Weise auf verschiedene Betriebsparameter einstellbar, z. B. auf verschiedene Gasmengen der Reaktanden $SiCl_4$ und $H_2O$. Eine Erwärmung der Reaktanden ist möglich durch mindestens eine Heizeinrichtung 4, z. B. ein mit Quarz überzogener elektrischer Widerstandsdraht, und/oder einen außerhalb des Aerosolgenerators angebrachten Ofen. In letzterem Fallbewirkt der Füllstoff 3 die benötigte Wärmeleitung zu den Reaktanden.

Die gemäß Fig. 3 dargestellte alternierende Anordnung der Austrittskörper 2 ermöglicht vorteilhafterweise eine genaue Bestimmung der Querschnittsfläche des Aerosolstromes sowie die Vermischung der Reaktanden. In dem beschriebenen Ausführungsbeispiel hat der entstehende Aerosolstrom einen im wesentlichen rechteckigen Querschnitt.

Die Erfindung ist nicht auf das beschriebene Ausführungsbeispiel beschränkt, sondern sinngemäß auf weitere anwendbar. Beispielsweise ist es möglich, die Austrittskörper derart anzuordnen, daß ein Aerosolstrom mit einem kreisförmigen Querschnitt entsteht.

**Patentansprüche**

1. Verfahren zur Herstellung eines Aerosolstro-

mes, insbesondere eines SiO$_2$-Partikel haltigen Aerosolstromes zur Herstellung einer Vorform für einen Lichtwellenleiter, bei welchem Verfahren

— aus einem Gas- und/oder Dampfgemisch durch eine flammenfreie chemische Reaktion ein Aerosol erzeugt wird, das insbesondere SiO$_2$-Partikel enthält,

— ein derart entstandener Aerosolstrom durch einen im wesentlichen aerosolfreien Gas- und/oder Dampfstrom geführt wird,

— der Aerosolstrom in einem im wesentlichen senkrecht stehendem Aerosolgenerator (6) erzeugt wird derart, daß der erzeugte Aerosolstrom nach oben strömt, und der Aerosolgenerator (6) mindestens einen heizbaren Laminator enthält, der aus mindestens einem Verteiler (1) besteht sowie mindestens einem Austrittskörper (2), der an dem Verteiler (1) angeschlossen wird und der einen wesentlich höheren Strömungswiderstand besitzt als der Verteiler (1).

2. Vorrichtung zur Herstellung eines Aerosolstromes, insbesondere eines SiO$_2$-Partikel haltigen Aerosolstromes zur Herstellung einer Vorform für einen Lichtwellenleiter, bei welcher Vorrichtung

— aus einem Gas- und/oder Dampfgemisch durch eine flammenfreie chemische Reaktion ein Aerosol, das insbesondere SiO$_2$-Partikel enthält, erzeugt wird,

— der entstandene Aerosolstrom durch einen im wesentlichen aerosolfreien Gas- und/oder Dampfstrom geführt wird, und

— in einem im wesentlichen senkrecht stehendem Aerosolgenerator (6) mindestens ein heizbarer Laminator vorhanden ist, bestehend aus einem Verteiler (1) sowie mindestens einem daran angeschlossenen Austrittskörper (2), welcher einen wesentlich höheren Strömungswiderstand besitzt als der Verteiler (1) und bei welchem der hohe Strömungswiderstand durch einen wärmebeständigen ersten Füllstoff (3) gebildet ist.

3. Vorrichtung zur Herstellung eines Aerosolstromes nach Anspruch 2, bei welcher Vorrichtung zumindest für jeden das Aerosol erzeugenden Reaktanden mindestens ein rohrförmiger Verteiler (1) vorhanden ist, an dessen Mantelfläche mindestens ein aufwärts ausgerichteter rohrförmiger Austrittskörper (2) angebracht ist, der als ersten Füllstoff (3) SiO$_2$-haltige Partikel enthält, deren Größe und/oder Menge entsprechend dem einzustellenden Strömungswiderstand gewählt sind.

4. Vorrichtung zur Herstellung eines Aerosolstromes nach Anspruch 2 oder Anspruch 3, bei welcher Vorrichtung zu verschiedenen Reaktanden gehörende Austrittskörper (2) alternierend angeordnet sind und daß eine derartige Anordnung entsprechend einer herzustellenden Austrittsfläche gewählt ist (Fig. 3).

5. Vorrichtung zur Herstellung eines Aerosolstromes nach einem der Ansprüche 2 bis 4, bei welcher Vorrichtung in dem ersten Füllstoff (3) eine Heizeinrichtung (4) vorhanden ist zur Erhitzung von mindestens einem Reaktanden.

6. Vorrichtung zur Herstellung eines Aerosolstromes nach einem der Ansprüche 2 bis 5, bei welcher Vorrichtung zwischen dem Austrittskörper (2) und dem Verteiler (1) ein gas- und/oder dampfdurchlässiger Trennkörper (5) vorhanden ist, der für den ersten Füllstoff (3) im wesentlichen undurchlässig ist.

7. Vorrichtung zur Herstellung eines Aerosolstromes nach einem der Ansprüche 2 bis 6, bei welcher Vorrichtung der Trennkörper (5) Quarzwolle und/oder Glasvlies enthält.

8. Vorrichtung zur Herstellung eines Aerosolstromes nach einem der Ansprüche 2 bis 7, bei welcher Vorrichtung der Verteiler (1) zur mechanischen Unterstützung des Trennkörpers (5) einen Stützaufbau enthält und/oder einen zweiten Füllstoff, der einen wesentlich kleineren Strömungswiderstand besitzt als der erste Füllstoff.

**Claims**

1. Method for the production of an aerosol current, in particular an aerosol current containing silicon dioxide particles for the production of a preform for an optical conductor, in which method

— an aerosol, which in particular contains silicon dioxide particles, is produced through a flame-free chemical reaction from a mixture of gas and/or vapour,

— an aerosol current arisen in this manner is conducted through a substantially aerosol-free current of gas and/or vapour,

— the aerosol current is produced in a substantially upright aerosol generator (6) in such a manner that the produced aerosol current flows upwardly and

— the aerosol generator (6) contains at least one heatable laminator, which consists of at least one distributor (1) as well as of at least one exit body (2), which is connected to the distributor (1) and which possesses a substantially higher flow resistance than the distributor (1).

2. Apparatus for the production of an aerosol current, in particular an aerosol current containing silicon dioxide particles for the production of a preform for an optical conductor, in which apparatus

— an aerosol, which in particular contains silicon dioxide particles, is produced through a flame-free chemical reaction from a mixture of gas and/or vapour.

— the arisen aerosol current is conducted through a substantially aerosol-free current of gas and/or vapour.

— at least one heatable laminator, which consists of a distributor (1) as well as of at least one exit body (2), which is connected thereat, possesses a substantially higher flow resistance than the distributor (1) and in which the high flow resistance is formed through a heat-proof first filling substance (3), is present in a substantially upright aerosol generator (6).

3. Apparatus for the production of an aerosol current according to claim 2, in which apparatus at least one tubular distributor (1), at the shell surface of which is mounted at least one upwardly oriented tubular exit body (2), which as first filling substance (3) contains particles, which contain silicon dioxide and the size and/or quantity of which is chosen according to the flow resistance to be set, is present at least for each reactant producing the aerosol.

4. Apparatus for the production of an aerosol current according to claim 2 or claim 3, in which apparatus exit bodies (2) belonging to different reactants are arranged in alternation and an arrangement of that kind is chosen in accordance with an exit area to be produced (Fig. 3).

5. Apparatus for the production of an aerosol current according to one of the claims 2 to 4, in which apparatus a heating equipment (4) for the heating-up of at least one reactant is present in the first filling substance (3).

6. Apparatus for the production of an aerosol current according to one of the claims 2 to 5, in which apparatus a separating body (5), which is permeable by gas and/or vapour and substantially impermeable by the first filling substance (3), is present between the exit body (2) and the distributor (1).

7. Apparatus for the production of an aerosol current according to one of the claims 2 to 6, in which apparatus the separating body (5) contains quartz wool and/or glass fleece.

8. Apparatus for the production of an aerosol current according to one of the claims 2 to 7, in which apparatus the distributor (1) contains, for the mechanical support of the separating body (5), a support construction and/or a second filling substance which possesses a substantially lower flow resistance than the first filling substance.

**Revendications**

1. Procédé pour former un courant d'aérosol, en particulier un courant d'aérosol contenant des particules de $SiO_2$ et servant lui-même à la fabrication d'un moule préalable pour un conducteur d'ondes lumineuses, procédé dans lequel

— on forme à partir d'un mélange de gaz et/ou de vapeurs, par une réaction chimique sans flammes, un aérosol contenant en particulier des particules de $SiO_2$,

— on envoie le courant d'aérosol formé dans un courant de gaz et/ou de vapeurs essentiellement exempt d'aérosol,

— on forme le courant d'aérosol dans un générateur d'aérosol (6) en disposition essentiellement verticale, dans des conditions telles que le courant d'aérosol formé s'écoule vers le haut, et

— le générateur d'aérosol (6) contient au moins un laminateur chauffable consistant en au moins un distributeur (1) et au moins un organe de sortie (2) placé à la suite du distributeur (1) et qui a une résistance à l'écoulement nettement supérieure à celle du distributeur (1).

2. Appareillage pour la formation d'un courant d'aérosol, en particulier pour la formation d'un courant d'aérosol contenant des particules de $SiO_2$ et servant lui-même à la fabrication d'un moule préalable pour un conducteur d'ondes lumineuses, appareillage dans lequel

— on forme à partir d'un mélange de gaz et/ou de vapeurs, dans une réaction chimique sans flammes, un aérosol contenant en particulier des particules de $SiO_2$,

— on envoie le courant d'aérosol formé dans un courant de gaz et/ou de vapeurs essentiellement exempt d'aérosol, et

— dans un générateur d'aérosol en disposition essentiellement verticale (6) il y a au moins un laminateur chauffable consistant en un distributeur (1) et au moins un organe de sortie (2) placé à la suite du distributeur, organe de sortie dont la résistance à l'écoulement est nettement supérieure à celle du distributeur (1) et dans lequel la forte résistance à l'écoulement est due à une première matière de charge (3) résistant à la chaleur.

3. Appareillage pour former un courant d'aérosol selon la revendication 2, dans lequel, pour chacun au moins des réactifs produisant l'aérosol, il y a au moins un distributeur tubulaire (1) sur la surface d'enveloppe duquel on a disposé au moins un organe de sortie tubulaire (2) dirigé vers le haut, lequel contient, en tant que première matière de charge (3) des particules contenant de la silice, dont la dimension et/ou la quantité sont choisies en fonction de la résistance à l'écoulement à laquelle on veut parvenir.

4. Appareillage pour former un courant d'aérosol selon la revendication 2 ou la revendication 3, dans lequel les organes de sortie (2) correspondant aux réactifs différents sont disposés en alternance, cette disposition étant choisie en fonction de la surface de sortie qu'on veut réaliser (figure 3).

5. Appareillage pour former un courant d'aérosol selon l'une des revendications 2 à 4, dans lequel, dans la première matière de charge (3) il y a un dispositif de chauffage (4) qui sert à réchauffer au moins un réactif.

6. Appareillage pour former un courant d'aérosol selon l'une des revendications 2 à 5 dans lequel, entre l'organe de sortie (2) et le distributeur (1), il y a un corps de séparation perméable au gaz et/ou aux vapeurs (5) essentiellement imperméable pour la première matière de charge (3).

7. Appareillage pour former un courant d'aérosol selon l'une des revendications 2 à 6, dans lequel le corps de séparation (5) contient de la laine de quartz et/ou une nappe de fibres de verre.

8. Appareillage pour former un courant d'aérosol selon l'une des revendications 2 à 7, dans lequel le distributeur (1) contient une structure de support permettant de supporter mécaniquement le corps de séparation (5) et/ou une deuxième matière de charge offrant une résistance à l'écoulement nettement plus faible que celle de la première matière de charge.

0 160 858

FIG. 1

FIG. 2

FIG. 3